Europäisches Patentamt

European Patent Office

Office européen des brevets

(19)

(11) Publication number: **0 156 479**
**B1**

(12) **EUROPEAN PATENT SPECIFICATION**

(45) Date of publication of patent specification: **12.04.89**

(51) Int. Cl.⁴: **C 03 C 1/00, C 03 C 10/12**

(21) Application number: **85300940.5**

(22) Date of filing: **13.02.85**

(54) Lithium alumino-silicate glass ceramics.

(30) Priority: **28.02.84 GB 8405120**

(43) Date of publication of application:
**02.10.85 Bulletin 85/40**

(45) Publication of the grant of the patent:
**12.04.89 Bulletin 89/15**

(84) Designated Contracting States:
**AT BE CH DE FR IT LI LU NL SE**

(56) References cited:
**FR-A-2 137 870**
**US-A-2 971 853**
**US-A-3 490 984**

**CHEMICAL ABSTRACTS, vol. 73, no. 4, 27th
July 1970, page 234, no. 18134p, Columbus,
Ohio, US; & JP - A - 70 04 869 (SHIBATA
HARIOGARASU CO., LTD.) 18-02-1970
Le Verre, H. Scholze, 1974, pages 205-215**

(73) Proprietor: **THE ENGLISH ELECTRIC COMPANY
LIMITED
1, Stanhope Gate
London W1A 1EH (GB)**

(72) Inventor: **Partridge, Graham
Church Lea Sellman Street
Gnosall Stafford, ST20 0EP (GB)**

(74) Representative: **Keppler, William Patrick
Central Patent Department Wembley Office The
General Electric Company, p.l.c. Hirst Research
Centre East Lane
Wembley Middlesex HA9 7PP (GB)**

Courier Press, Leamington Spa, England.

**Description**

The present invention relates to lithium aluminosilicate based glasses and glass-ceramic materials, that is to say glasses and glass-ceramic materials containing oxides of lithium, aluminium and silicon. The invention particularly relates to microcrystalline lithium aluminosilicate glass-ceramics which are transmissive to infrared and/or visible radiation and which contain β-eucryptite solid solution as the principal crystal phase.

β-eucryptite is a lithium aluminium silicate having a distorted hexagonal structure, in which some of the silicon lattice sites are filled by phosphorus and some of the lithium and aluminium lattice sites are filled by other metals. For example zinc and/or magnesium may substitute for aluminium and magnesium may substitute for lithium to an extent sufficient to balance the ionic changes. β-eucryptite has a negative thermal coefficient of expansion which can be altered in magnitude by varying the nature and degree of substitution in the lattice. In practice β-eucryptite is formed by controlled devitrification from the glass phase (which has a positive temperature coefficient) and the resulting glass-ceramic therefore has a thermal coefficient of expansion (typically near zero) which for a given proportion of β-eucryptite (typically 70% by weight) is determined by the nature and degree of substitution in the β-eucryptite lattice.

Transparent lithium alumino silicate glass-ceramics are particularly desirable materials, since their qualities of transparency, high strength and low thermal expansion make them useful for the construction of laser envelopes, mirrors, cooker hob plates and a wide range of other articles. However the production of transparent lithium alumino silicate glass-ceramics has hitherto presented considerable difficulties. It is in general necessary to refine any glass to remove "batch" and "seed" before it is solidified, if a transparent material is to be obtained. Hitherto, the only refining agents known to be suitable for the production of transparent lithium alumino silicate glass-ceramics have been arsenic and antimony oxides. These materials do not greatly affect the coefficient of thermal expansion of the solid material and do not greatly increase the rate of nucleation of the β-eucryptite during the devitrification process. Accordingly glass-ceramics can be obtained in which the β-eucryptite micro-crystals are typically in the order of 50 μm or less in diameter, resulting in a transparency to all radiation of wavelength appreciably greater than this value. However arsenic and antimony oxides are appreciably volatile at the refining temperature (typically 1400 to 1700°C) and their use requires considerable safety and environmental precautions.

Cerium dioxide is known as a refining agent for glasses (see "Coloured Glasses" by W. A. Weyl, published by the Society of Glass Technology, 1951) but it has not hitherto been used for the production of transparent lithium alumino silicate glass-ceramics.

French patent application No. 2,173,694A relates to opal lithium alumino-silicate glasses containing cerium dioxide and small proportions of copper, silver or gold. These metals photosensitise the glasses and enable the glasses to crystallise and form glass-ceramics following exposure to UV radiation. All the examples disclosed incorporate antimony oxide as a refining agent.

U.S. patent No. 3,454,386 discloses transparent lithium alumino-silicate glass-ceramic articles containing a very small proportion (0.05%) of cerium dioxide in combination with copper or a precious metal. Crystallisation is induced by irradiating the glass with high energy electrons, when the cerium present interacts with the copper or precious metal to form nucleation sites. In this patent it is stated that the exact role played by cerium in the glass is not clear. However the proportion of cerium dioxide present is much too low for it to have any appreciable refining action.

Chemical Abstract No. 26,752 similarly discloses lithium alumino-silicate glass containing a small proportion (0.1%) of cerium dioxide, which is too low to give a significant refining action. Crystallisation induced by UV irradiation and heat treatment is disclosed, by a mechanism involving the $Ce^{3+}$ to $Ce^{4+}$ transformation during irradiation and the subsequent incorporation of $Ce^{4+}$ ions into the Si-O framework on heating.

UK Patent No. 1,366,701 (equivalent to French patent No. 2,137,870) in the name of The English Electric Company Limited relates to low-melting point (1450°C to 1550°C) lithium alumino-silicate glasses with a high zinc content (7.5 to 9.0% ZnO) and containing up to 0.5% of one or more of the refining agents arsenic trioxide, antimony trioxide and cerium dioxide. Only one example of a glass incorporating cerium dioxide as the refining agent is disclosed, however, and this glass is described as brownish and opalescent in appearance. Thus there is no indication in this patent that an optically uniform lithium-alumino silicate glass or glass-ceramic can be produced by the method disclosed.

We have found that transparent lithium alumino silicate glass-ceramics of low, reproducible thermal coefficient of expansion may be produced by refining molten lithium alumino silicate glasses with cerium dioxide and/or cerate compounds at temperatures that extend beyond those that are disclosed in GB 1,366,701 and subjecting the refined glasses to a controlled thermal devitrification process.

According to one aspect of the present invention, there is provided a method of refining a molten lithium alumino silicate glass capable of controlled devitrification having the following composition by weight expressed in terms of oxide constituents:

| | |
|---|---|
| $SiO_2$ | 54 to 68% |
| $Li_2O$ | 3.0 to 4.5% |
| $K_2O$ | 0.0 to 3.0% |

| Na$_2$O | 0 to 1.0% |
| ZnO | 0.5 to 4.0% |
| MgO | 0 to 2.0% |
| Al$_2$O$_3$ | 17.0 to 26.5% |
| TiO$_2$ | 0.5 to 5.0% |
| ZrO$_2$ | 0 to 3.0% |
| P$_2$O$_5$ | 0 to 8.0% |

together with up to 5% by weight of additional or incidental constituents which do not adversely affect the melting or crystallisation behaviour of the glass to a substantial extent, this glass being free of arsenic and antimony, and cerium dioxide, or a cerate compound, or a cerium compound capable of reacting with said molten glass to form cerium dioxide is added to a batch of the other constituents in a proportion between 0.2 and 2% by weight (expressed in terms of cerium dioxide) and the resulting batch mixture is melted and maintained in a molten state at a temperature of at least 1520°C until it is substantially free from batch and seed.

The refined glass may then be formed into any required shape and partially devitrified in a controlled heat treatment process to form a glass-ceramic article which contains β-eucryptite as the principal crystalline phase and which is substantially transparent to infra-red and visible radiation. The glass may optionally be annealed (suitably at a temperature of 600 to 700°C for a period of up to two hours) after being formed into shape (which may be by any suitable glass-working technique, such as casting, drawing, pressing and rolling for example) and before devitrification.

The devitrification process may be carried out in a single stage by heating the glass at a rate not exceeding 5°C per minute to a holding temperature between 750°C and 1000°C and maintaining this temperature for at least fifteen minutes, as described in U.K. patent specification No. 1,022,681. The final fifteen minute holding stage may be curtailed considerably when thin-section glass articles (having a thickness of less than, say, 5 mm) are devitrified. Alternatively a multi-stage process may be used, in which the temperature is raised at a rate not exceeding 5°C per minute to a first holding stage in the range 650°C to 900°C, this holding temperature is maintained for at least 15 minutes, and then the temperature is raised, optionally through one or more further holding stages, to a final holding temperature in the range 800°C to 1000°C.

It is important to note that the optimum heating rates and number of holding stages in the heat treatment process are strongly influenced by the cross-section of the article being heat-treated. This arises not only from the need to ensure reasonable temperature homogeneity throughout the bulk of the article, with the heat being applied to outer surfaces and in the context of a low thermal conductivity material, but also because considerable heat-effects can arise during precipitation of crystal phases. These latter effects can give rise to marked temperature rises within the material, leading to stressing and possible fracture. In order to overcome this, it is necessary with thick sections to allow periods of "stabilization" during heat-treatment, so that viscous flow in the residual glassy phase can relieve stresses as they develop.

The above thermal effects are discussed by G. Partridge in the article "Nucleation and crystallisation phenomena in low expansion Li$_2$O—Al$_2$O$_3$—SiO$_2$ glass-ceramics"—Glass Technology 23 (3), 1982 pp 133—138. The rate of formation of β-eucryptite is dependent upon the nature and amount of nucleating agents present in the glass. Phosphorus, aluminium and titanium oxides are typical suitable nucleating agents.

The proportion of cerium dioxide, cerate compound or cerium dioxide/cerate-forming compound added to the melt may be somewhat greater than the minimum required for refining purposes and will then influence the spectral transmission of the glass-ceramic particularly in the ultra-violet, reducing transmission in the UV and even moving the "UV cut-off" of the transmission curve into the visible blue. This ability, which is known for other glasses, has also been found to occur in the compositions of the present low expansion, transparent glass-ceramics when the proportion of cerium dioxide is greater than about 0.5% by weight, and can be of considerable advantage in a number of applications, for example cooker hob plates, where it is advantageous to limit transmission to the red end of the visible spectrum so that elements below the plate can be seen when on, but are obscured when off. It also enables the materials to be used where the passage of harmful UV radiation must be restricted.

According to another aspect of the invention, a lithium alumino-silicate glass-ceramic containing microcrystalline β-eucryptite solid solution as the principal solid phase is characterised by being substantially free of arsenic and antimony and by being substantially optically uniform.

The term "microcrystalline" is intended to include all mean crystal sizes less than 100 nm across.

The term "optically uniform" is intended to include transparency and other states where no appreciable light scattering on a microscopic scale occurs in the bulk of the material (the term "light" including visible and I.R. radiation) but to exclude opalescence and complete opacity. However where the glass-ceramic is required to be non-transmissive to particular wavelengths, oxides of iron, chromium, nickel, copper, cobalt, manganese, vanadium and other metals may be incorporated in glass-ceramic articles in accordance with this aspect of the invention.

The glass-ceramic of this aspect of the invention also contains cerium dioxide or a cerate.

The glass-ceramic preferably has a coefficient of thermal expansion in the range ±25×10$^{-7}$/°C over the

temperature range 20°C to 500°C and more preferably has a coefficient of thermal expansion in the range of $\pm 5 \times 10^{-7}/°C$ over the range 20° to 100° and $\pm 10 \times 10^{-7}/°C$ over the range of 20°C to 700°C.

The glass-ceramic may be in the form of a cooker hob. The coefficient of thermal expansion may be varied by adding controlled amounts of magnesium and/or zinc oxides to the melt and subsequently devitrifying the glass to a controlled extent.

For the preparation of the glasses from which the various materials in accordance with the invention are prepared the following typical batch materials may be used, as appropriate, to provide the constituents of the glasses:—

| Constituent | Batch material |
|---|---|
| $SiO_2$ | Good quality glass making sand, quartz. |
| $Li_2O$ | Lithium carbonate ($Li_2CO_3$), petalite ($Li_2O \cdot Al_2O_3 \cdot 8SiO_2$). |
| $K_2O$ | Potassium carbonate ($K_2CO_3$), potassium nitrate ($KNO_3$). |
| $Na_2O$ | Sodium carbonate ($Na_2CO_3$), sodium sulphate ($Na_2SO_4$). |
| ZnO | Zinc oxide (ZnO). |
| MgO | Magnesium oxide (MgO), magnesium carbonate ($MgCO_3$). |
| $Al_2O_3$ | Aluminium oxide ($Al_2O_3$), petalite. |
| $TiO_2$ | Titanium dioxide ($TiO_2$). |
| $ZrO_2$ | Zirconium dioxide ($ZrO_2$). |
| $P_2O_5$ | Metallic phosphate compatible with glass composition, ammonium phosphate. |
| $CeO_2$ | Cerium dioxide ($CeO_2$), appropriate cerates. |

It will be appreciated that the batch materials are not restricted to the above. Others may be used provided they are compatible with the composition and properties of the desired glass-ceramic. It will be further noted that, for certain applications, the batch constituents will need to be of high purity (for example minimum "Analar" grade) whereas for other applications normal commercial purities are acceptable. Examples of applications where high purity materials are required are where high transmission in the visible is required (e.g. laser envelopes, instrumentation)—high purity raw materials reduce the incidence of such oxides as iron oxide ($Fe_2O_3$) which would reduce transmission. Examples of applications where lower purity levels can be tolerated are in applications where transmission in the visible may need to be restricted (e.g. cooker hob plates) although good transmission in the near infra-red is advantageous.

The batch materials are chosen so as to result in glasses which have proportions of the constituents, inclusive of the nucleation catalyst expressed in terms of oxide constituents, falling within the following ranges:—

| | Wt.% |
|---|---|
| $SiO_2$ | 54.0—68.0 |
| $Li_2O$ | 3.0— 4.5 |
| $K_2O$ | 0 — 3.0 |
| $Na_2O$ | 0 — 1.0 |
| ZnO | 0.5— 4.0 |
| MgO | 0 — 2.0 |
| $Al_2O_3$ | 17.0—26.5 |
| $TiO_2$ | 0.5— 5.0 |
| $ZrO_2$ | 0 — 3.0 |
| $P_2O_5$ | 0 — 8.0 |
| $CeO_2$ | 0.2— 2.0 |

In addition to the above, it will be appreciated that other non-essential constituents are permissible in small quantities (up to about 5 weight percent) provided they do not hinder the melting or subsequent crystallization of the glasses to give glass-ceramics having the desired properties.

Higher proportions of zinc oxide (4.0 to 9.0%) lower the melting point of the glasses. The low volatility of cerium dioxide in comparison with the ansenic and antimony oxides is particularly advantageous when high melting point glasses (of low zinc content) are refined at temperatures above 1550°C for example.

Where it is essential to control the transmission of the glass-ceramics, particularly in the visible part of the spectrum, as discussed above, then proportions of the following oxides, for example, can be included in the composition as given below, either alone or in combination:—

4

| | | |
|---|---|---|
| $Fe_2O_3$ | 0—1.0 | |
| $Cr_2O_3$ | 0—1.0 | |
| NiO | 0—1.0 | |
| CuO | 0—1.0 | Total |
| $Co_3O_4$ | 0—0.5 | 0—2.0 Wt.% |
| $Mn_3O_4$ | 0—1.0 | |
| $V_2O_5$ | 0—1.0 | |

Examples of glass-ceramic compositions falling within the above ranges are given in Table I.

The batch materials were thoroughly mixed before melting and were melted in high alumina, alumino-silicate or platinum/rhodium alloy crucibles until the batch reactions were complete and the glasses were fully refined. The melting temperatures used ranged from 1520°C to 1650°C and were so arranged as to enable the glass to be batch and seed free. After refining, which requires a period of up to 30 hours, the glasses may be shaped by the normal methods employed in glass working (e.g. casting, drawing, pressing rolling, etc.). The articles obtained may then be annealed at a suitable temperature in the range 600°C to 700°C for a period of up to two hours followed by slow cooling to room temperature. Alternatively the articles may be immediately subjected to the heat-treatment processes described above in order to achieve the required devitrification.

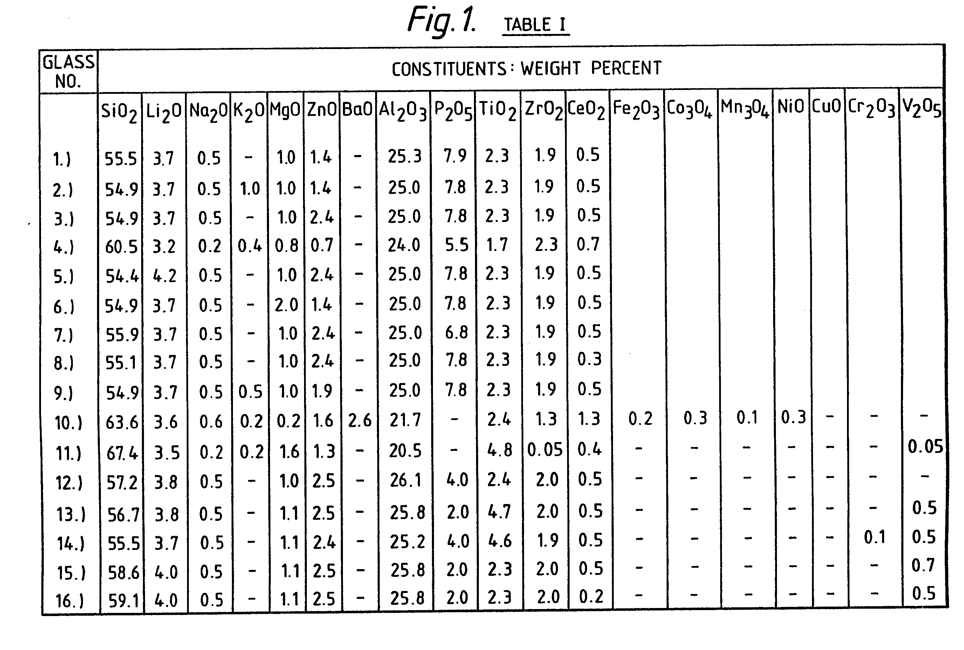

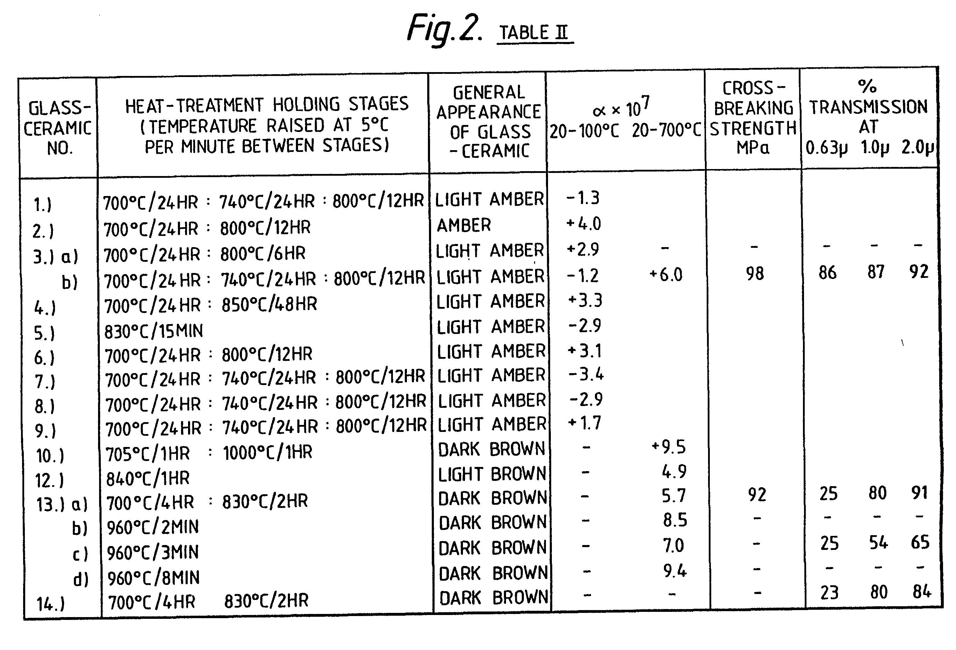

Compositions, processes and properties of some glasses and glass-ceramics in accordance with the invention are shown by way of example in Figures 1 to 3 of the accompanying drawings, of which:—

Figure 1 (Table I) shows the constituents (in proportions by weight) of sixteen glasses in accordance with the invention.

Figure 2 (Table II) shows the properties of various-glass-ceramics obtained by heat-treating the above glasses in various ways, and

Figure 3 is a plot of transmission: wavelength for a glass ceramic in accordance with the invention and two prior-art glass-ceramics.

The Tables are generally self-explanatory, but it will be noted that in each case the glass-ceramics obtained are transparent or nearly so and have coefficients of thermal expansion (α) which approximate to zero.

The precise details of the required heat treatment will depend on the shape and size of the required article and the heat-treatment holding stages listed in Table II are for the purpose of general guidance only. However one specific heat treatment suitable for converting thick pieces of glass No. 3 into transparent low expansion glass-ceramic articles is as follows:—

(i) Heat at 4°C/minute to 700°C

(ii) Maintain at 700°C for 24 hours

(iii) Heat at 2°C/minute to 740°C

(iv) Maintain at 740°C for 24 hours

(v) Heat at 2°C/minute to 800°C

(vi) Maintain at 800°C for 12 hours.

(vii) Allow to cool at the natural cooling rate of the furnace but at a rate not exceeding 4°C/minute.

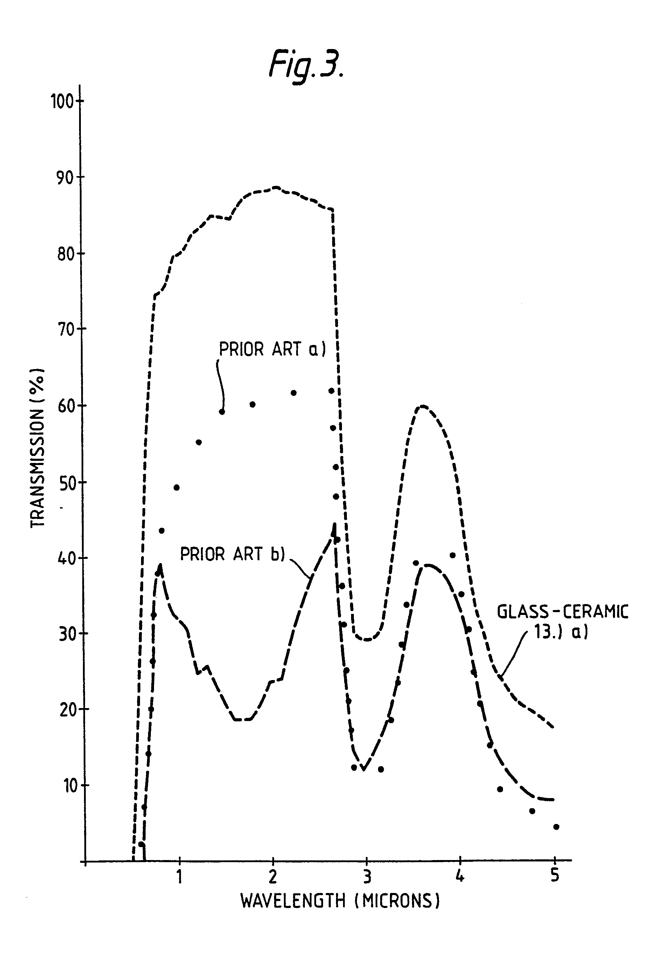

In Table II the glass-ceramics numbered 1.) to 14.) correspond to the glass compositions 1.) to 14.) listed in Table I. In two cases (glass compositions 3.) and 13.)) various glass-ceramics of the same composition are shown whose properties differ according to the heat treatment applied to the glass. Glass-ceramic 13.)a) has particularly suitable properties for use as a hot-plate material, namely a low thermal coefficient of expansion α, a high cross-breaking strength and a high I.R. transmissivity with a sharp UV cut-off. A plot of % transmission:wavelength for this glass-ceramic (as measured on a 4 mn thick hot-plate with corrections for losses due to reflection) is shown in Figure 3, with similar plots relating to two comparable prior art hot-plates shown for comparison. The hot-plate in accordance with the present invention is highly transmissive in the red region. (0.6 to 1.0 μm), making the hot plate element visible when it is switched on. This is an important safety aspect.

**Claims**

1. A method of refining a molten lithium alumino silicate glass capable of controlled devitrification, characterised in that said glass has the following composition by weight expressed in terms of oxide constituents:

| | | | |
|---|---|---|---|
| $SiO_2$ | 54 | to | 68% |
| $Li_2O$ | 3.0 | to | 4.5% |
| $K_2O$ | 0.0 | to | 3.0% |
| $Na_2O$ | 0 | to | 1.0% |
| ZnO | 0.5 | to | 4.0% |
| MgO | 0 | to | 2.0% |
| $Al_2O_3$ | 17.0 | to | 26.5% |
| $TiO_2$ | 0.5 | to | 5.0% |
| $ZrO_2$ | 0 | to | 3.0% |
| $P_2O_5$ | 0 | to | 8.0% |

together with up to 5% by weight of additional or incidental constituents which do not adversely affect the melting or crystallisation behaviour of the glass to a substantial extent, this glass being free of arsenic and antimony, and in that cerium dioxide, or a cerate compound, or a cerium compound capable of reacting with said molten glass to form cerium dioxide, is added to a batch of the other constituents in a proportion between 0.2 and 2% by weight (expressed in terms of cerium dioxide) and the resulting batch mixture is melted and maintained in a molten state at a temperature of at least 1520°C until it is substantially free from batch and seed.

2. A method of manufacturing a glass-ceramic article, characterized in that a glass refined according to Claim 1 and having the composition of Claim 1 is formed into shape and partially devitrified in a controlled heat treatment process to form said glass-ceramic article containing β-eucryptite as the principal crystalline phase and being transmissive of infra-red and visible radiation.

3. A method according to Claim 2, characterised in that the glass is annealed in a separate annealing stage after being formed into shape and before devitrification.

4. A method according to Claim 2 or Claim 3, wherein the devitrification process is carried out in a single state by heating the glass at a rate not exceeding 5°C per minute to a holding temperature between 750°C and 1000°C.

5. A method according to Claim 2 or Claim 3 wherein a multi-stage devitrification process is used, in which the temperature of the glass is raised at a rate not exceeding 5°C per minute to a first holding stage in the range 650°C to 900°C, this holding temperature is maintained for at least 15 minutes, and then the temperature is raised to a final holding temperature in the range 800°C to 1000°C.

6. A method according to Claim 5 wherein said temperature is raised from said first holding stage via one or more further holding stages.

7. A method according to any preceding claim, wherein the proportion of cerium dioxide, cerate compound or cerium dioxide/cerate-forming compound added to the batch is equivalent to at least 0.5% by weight expressed in terms of cerium dioxide.

8. A glass-ceramic article formed by the method according to any of Claims 2 to 7, being free of arsenic and antimony and being transmissive of infra-red and visible radiation.

9. A glass-ceramic article as claimed in Claim 8 being optically uniform.

10. A glass-ceramic article according to Claim 8 or 9 incorporating an oxide of at least one of the metals or iron, chromium, nickel, copper, cobalt, manganese and vanadium.

11. A glass-ceramic as claimed in any of Claims 8 to 10 having a coefficient of thermal expansion of between $\pm 25 \times 10^{-7}$°C over the temperature range 20°C to 500°C.

12. A glass-ceramic as claimed in Claim 11 having a coefficient of thermal expansion between $\pm 5 \times 10^{-7}$/°C over the temperature range 20°C to 100°C and between $\pm 10 \times 10^{-7}$/°C over the temperature range 20°C to 700°C.

13. A cooking hob composed of a glass-ceramic as claimed in any of Claims 8 to 12.

14. A layer incorporating a glass-ceramic as claimed in any of Claims 8 to 13.

**Patentansprüche**

1. Verfahren zum Läutern eines geschmolzenen Lithiumaluminosilicatglases, das für eine gesteuerte Entglasung geeignet ist, dadurch gekennzeichnet, daß das Glas die folgende Gewichtszusammensetzung aus gedrückt in bezug auf Oxid-Bestandteile hat:

| | | |
|---|---|---|
| SiO$_2$ | 54 | bis 68% |
| Li$_2$O | 3,0 | bis 4,5% |
| K$_2$O | 0,0 | bis 3,0% |
| Na$_2$O | 0 | bis 1,0% |
| ZnO | 0,5 | bis 4,0% |
| MgO | 0 | bis 2,0% |
| Al$_2$O$_3$ | 17,0 | bis 26,5% |
| TiO$_2$ | 0,5 | bis 5,0% |
| ZrO$_2$ | 0 | bis 3,0% |
| P$_2$O$_5$ | 0 | bis 8,0% |

zusammen mit bis zu 5 Gew.-% an Zusatz- oder Nebenbestandteilen, die das Schmelz- oder Kristallisationsverhalten des Glases in einem beschtlichen Ausmaß nicht nachteilig beeinträchtigen, wobei dieses Glas frei von Arsen und Antimon ist, und daß Cerdioxid, oder eine Cerat-Verbindung, oder eine Cer-Verbindung, die zur Reaktion mit dem geschmolzenen Glas unter Bildung von Cerdioxid fähig ist, einem Gemenge aus den anderen Bestandteilen mit einem Anteil zwischen 0,2 und 2 Gew.-% (bezogen auf Cerdioxid) hinzufügt und die resultierende Gemengemischung geschmolzen und in einem geschmolzenen Zustand bei einer Temperatur von wenigstens 1520°C gehalten wird, bis sie im wesentlichen frei von Gemenge und Blasen ist.

2. Verfahren zum Herstellen eines glaskeramischen Artikels, dadurch gekennzeichnet, daß ein nach Anspruch 1 geläutertes und die Zusammensetzung nach Anspruch 1 habendes Glas in eine Gestalt geformt und in einem gesteuerten Wärmebehandlungsprozeß teilweise entglast wird, um den glaskeramischen Artikel zu bilden, der β-Eukryptit als Hauptkristallphase enthält und für Infrarot- und sichtbare Strahlen durchlässig ist.

3. Verfahren nach Anspruch 2, dadurch gekennzeichnet, daß das Glas nach der Gestaltformung und vor der Entglasung in einer separaten Kühlstufe gekühlt wird.

4. Verfahren nach Anspruch 2 oder Anspruch 3, bei dem der Entglasungsprozeß in einer einzigen Stufe durch Erhitzen des Glases mit einer Geschwindigkeit, die 5°C pro Minute nicht überschreitet, auf eine Haltetemperatur zwischen 750°C und 1000°C durchgeführt wird.

5. Verfahren nach Anspruch 2 oder Anspruch 3, bei dem ein mehrstufiger Entglasungsprozeß angewendet wird, im Verlaufe dessen die Temperatur des Glases mit einer Geschwindigkeit, die 5°C pro Minute nicht überschreitet, auf eine erste Haltestufe in den Bereich von 650°C bis 900°C angehoben wird, diese Haltetemperatur für wenigstens 15 Minuten aufrechterhalten wird, und dann die Temperatur auf eine endgültige Haltetemperatur in den Bereich von 800°C bis 1000°C angehoben wird.

6. Verfahren nach Anspruch 5, bei dem die Temperatur ausgehend von der ersten Haltestufe über eine oder mehrere weitere Haltestufen angehoben wird.

7. Verfahren nach irgendeinem vorstehenden Anspruch, bei dem der dem Gemenge zugesetzte Anteil an Cerdioxid, an der Gerat-Verbindung oder der Cerdioxid/Cerat-bildenden Verbindung wenigstens 0,5 Gew.-% bezogen auf Cerdioxid äquivalent ist.

8. Glaskeramischer Artikel, hergestellt durch das Verfahren nach irgendeinem der Ansprüche 2 bis 7, wobei dieser Artikel frei von Arsen und Antimon ist und für Infrarot- und sichtbare Strahlen durchlässig ist.

9. Glaskeramischer Artikel nach Anspruch 8, der optisch gleichförmig ist.

10. Glaskeramischer Artikel nach Anspruch 8 oder 9, der ein Oxid von wenigstens einem der Metalls Eisen, Chrom, Nickel, Kupfer, Kobalt, Mangen und Vanadium enthält.

11. Glaskeramik wie beansprucht in irgendeinem der Ansprüche 8 bis 10 mit einem Wärmeausdehnungskoeffizienten zwischen $\pm 25 \times 10^{-7}$/°C über den Temperaturbereich von 20°C bis 500°C.

12. Glaskeramik wie beansprucht in Anspruch 11 mit einem Wärmeausdehnungskoeffizienten zwischen $\pm 5 \times 10^{-7}$/°C über den Temperaturbereich von 20°C bis 100°C und zwischen $\pm 10 \times 10^{-7}$/°C über den Temperaturbereich von 20°C bis 700°C.

13. Kochfeld bestehend aus Glaskeramik wie beansprucht in irgendeinem der Ansprüche 8 bis 12.

14. Laser enthaltend Glaskeramik wie beansprucht in irgendeinem der Ansprüche 8 bis 13.

## Revendications

1. Procédé d'affinage d'un verre d'aluminosilicate de lithium fondu, capable de subir une dévitrification réglée, procédé caractérisé en ce que ledit verre a la composition pondérale suivante, exprimée en termes des oxydes constituants:

| | | |
|---|---|---|
| SiO$_2$ | 54 à 68% |
| Li$_2$O | 3,0 à 4,5% |
| K$_2$O | 0,0 à 3,0% |
| Na$_2$O | 0 à 1,0% |
| ZnO | 0,5 à 4,0% |
| MgO | 0 à 2,0% |
| Al$_2$O$_3$ | 17,0 à 26,5% |
| TiO$_2$ | 0,5 à 5,0% |
| ZrO$_2$ | 0 à 3,0% |
| P$_2$O$_5$ | 0 à 8,0% |

avec jusqu'à 5% en poids de constituants supplémentaires ou fortuits, qui ne nuisent pas dans une mesure importante au comportement de fusion ou de cristallisation du verre, ce verre étant dépourvu d'arsenic et d'antimoine, et en ce qu'on ajoute à un ensemble des autres constituants, en une proportion comprise entre 0,2 et 2% en poids (proportion exprimée en termes du bioxyde de cérium) du bioxyde de cérium ou un cérate, ou un composé de cérium capable de réagir avec ledit verre fondu pour former du bioxyde de cérium, et l'on fait fondre le mélange des matières premières résultant et on le maintient à l'état fondu à une température d'au moins 1520°C jusqu'à ce que ce mélange soit sensiblement dépourvu de matières premières et de germes.

2. Procédé de fabrication d'un article en vitrocéramique, caractérisé en ce qu'on façonne un verre affiné selon la revendication 1, et ayant la composition indiquée à la revendication 1, et on le dévitrifie partiellement dans un procédé de traitement thermique réglé, pour former ledit article en vitro-céramique contenant de la β-eucryptite comme principale phase cristalline et qui est transparente pour le rayonnement infrarouge et pour le rayonnement visible.

3. Procédé selon la revendication 2, caractérisé en ce qu'on recuit le verre dans une étape de recuit séparée, après avoir conformé ce verre et avant sa dévitrification.

4. Procédé selon la revendication 2 ou 3, dans lequel on met en oeuvre le processus de dévitrification en une seule étape, en chauffant le verre à une vitesse n'excédant pas 5°C par minute jusqu'à une température de maintien comprise entre 750°C et 1000°C.

5. Procédé selon la revendication 2 ou la revendication 3, dans lequel on utilise un processus de dévitrification en plusieurs étapes, dans lequel on élève la température de verre, à une vitesse n'excédant pas 5°C par minute, à une première étape de maintien comprise entre 650°C et 900°C, on conserve cette température de maintien pendant au moins 15 mintues, puis on élève la température jusqu'à une température finale de maintien comprise entre 800°C et 1000°C.

6. Procédé selon la revendication 5, dans lequel on élève ladite température, à partir de ladite première étape de maintien, en passent par une ou plusieurs autres étapes de maintien.

7. Procédé selon l'une quelconque des revendications précédentes, dans lequel la proportion de bioxyde de cérium, du cérate ou du composé formateur de bioxyde de cérium/cérate que l'on ajoute à la charge des matières premières équivaut à au moins 0,5% en poids, cette proportion étant exprimée en termes du bioxyde de cérium.

8. Article en vitro-céramique, formé par le procédé selon l'une quelconque des revendications 2 à 7, qui est dépourvu d'arsenic et d'antimoine et est transparent au rayonnement infrarouge et au rayonnement visible.

9. Article en vitro-céramique selon la revendication 8, qui est optiquement uniforme.

10. Article en vitro-céramique selon la revendication 8 ou 9, incorporant un oxyde d'au moins l'un des métaux fer, chrome, nickel, cuivre, cobalt, manganèse et vanadium.

11. Vitro-céramique, telle que revendiquée dans l'une quelconque des revendications 8 à 10, ayant un coefficient de dilatation thermique compris entre $\pm 25 \times 10^{-7}$°C dans la gamme des températures allant de 20°C à 500°C.

12. Vitro-céramique telle que revendiquée à la revendication 11, ayant un coefficient de dilatation thermique compris entre $\pm 5 \times 10^{-7}$/°C dans la gamme des températures allant de 20°C à 100°C et entre $\pm 10 \times 10^{-7}$/°C dans la gamme des températures allant de 20°C à 700°C.

13. Plaque latérale de cuisson, composée d'une vitro-céramique telle que revendique dans l'une quelconque des revendications 8 à 12.

14. Laser incorporant une vitro-céramique telle que revendiquée dans l'une quelconque des revendications 8 à 12.

## Fig.1. TABLE I

| GLASS NO. | CONSTITUENTS: WEIGHT PERCENT | | | | | | | | | | | | | | | | | | |
|---|---|---|---|---|---|---|---|---|---|---|---|---|---|---|---|---|---|---|---|
| | $SiO_2$ | $Li_2O$ | $Na_2O$ | $K_2O$ | $MgO$ | $ZnO$ | $BaO$ | $Al_2O_3$ | $P_2O_5$ | $TiO_2$ | $ZrO_2$ | $CeO_2$ | $Fe_2O_3$ | $Co_3O_4$ | $Mn_3O_4$ | $NiO$ | $CuO$ | $Cr_2O_3$ | $V_2O_5$ |
| 1.) | 55.5 | 3.7 | 0.5 | – | 1.0 | 1.4 | – | 25.3 | 7.9 | 2.3 | 1.9 | 0.5 | | | | | | | |
| 2.) | 54.9 | 3.7 | 0.5 | 1.0 | 1.0 | 1.4 | – | 25.0 | 7.8 | 2.3 | 1.9 | 0.5 | | | | | | | |
| 3.) | 54.9 | 3.7 | 0.5 | – | 1.0 | 2.4 | – | 25.0 | 7.8 | 2.3 | 1.9 | 0.5 | | | | | | | |
| 4.) | 60.5 | 3.2 | 0.2 | 0.4 | 0.8 | 0.7 | – | 24.0 | 5.5 | 1.7 | 2.3 | 0.7 | | | | | | | |
| 5.) | 54.4 | 4.2 | 0.5 | – | 1.0 | 2.4 | – | 25.0 | 7.8 | 2.3 | 1.9 | 0.5 | | | | | | | |
| 6.) | 54.9 | 3.7 | 0.5 | – | 2.0 | 1.4 | – | 25.0 | 7.8 | 2.3 | 1.9 | 0.5 | | | | | | | |
| 7.) | 55.9 | 3.7 | 0.5 | – | 1.0 | 2.4 | – | 25.0 | 6.8 | 2.3 | 1.9 | 0.5 | | | | | | | |
| 8.) | 55.1 | 3.7 | 0.5 | – | 1.0 | 2.4 | – | 25.0 | 7.8 | 2.3 | 1.9 | 0.3 | | | | | | | |
| 9.) | 54.9 | 3.7 | 0.5 | 0.5 | 1.0 | 1.9 | – | 25.0 | 7.8 | 2.3 | 1.9 | 0.5 | | | | | | | |
| 10.) | 63.6 | 3.6 | 0.6 | 0.2 | 0.2 | 1.6 | 2.6 | 21.7 | – | 2.4 | 1.3 | 1.3 | 0.2 | 0.3 | 0.1 | 0.3 | – | – | – |
| 11.) | 67.4 | 3.5 | 0.2 | 0.2 | 1.6 | 1.3 | – | 20.5 | – | 4.8 | 0.05 | 0.4 | – | – | – | – | – | – | 0.05 |
| 12.) | 57.2 | 3.8 | 0.5 | – | 1.0 | 2.5 | – | 26.1 | 4.0 | 2.4 | 2.0 | 0.5 | – | – | – | – | – | – | – |
| 13.) | 56.7 | 3.8 | 0.5 | – | 1.1 | 2.5 | – | 25.8 | 2.0 | 4.7 | 2.0 | 0.5 | – | – | – | – | – | – | 0.5 |
| 14.) | 55.5 | 3.7 | 0.5 | – | 1.1 | 2.4 | – | 25.2 | 4.0 | 4.6 | 1.9 | 0.5 | – | – | – | – | – | 0.1 | 0.5 |
| 15.) | 58.6 | 4.0 | 0.5 | – | 1.1 | 2.5 | – | 25.8 | 2.0 | 2.3 | 2.0 | 0.5 | – | – | – | – | – | – | 0.7 |
| 16.) | 59.1 | 4.0 | 0.5 | – | 1.1 | 2.5 | – | 25.8 | 2.0 | 2.3 | 2.0 | 0.2 | – | – | – | – | – | – | 0.5 |

EP 0 156 479 B1

## Fig.2. TABLE II

| GLASS-CERAMIC NO. | HEAT-TREATMENT HOLDING STAGES (TEMPERATURE RAISED AT 5°C PER MINUTE BETWEEN STAGES) | GENERAL APPEARANCE OF GLASS-CERAMIC | $\alpha \times 10^7$ 20-100°C | 20-700°C | CROSS-BREAKING STRENGTH MPa | % TRANSMISSION AT 0.63µ | 1.0µ | 2.0µ |
|---|---|---|---|---|---|---|---|---|
| 1.) | 700°C/24HR : 740°C/24HR : 800°C/12HR | LIGHT AMBER | −1.3 | | | | | |
| 2.) | 700°C/24HR : 800°C/12HR | AMBER | +4.0 | | | | | |
| 3.) a) | 700°C/24HR : 800°C/6HR | LIGHT AMBER | +2.9 | − | − | − | − | − |
| b) | 700°C/24HR : 740°C/24HR : 800°C/12HR | LIGHT AMBER | −1.2 | +6.0 | 98 | 86 | 87 | 92 |
| 4.) | 700°C/24HR : 850°C/48HR | LIGHT AMBER | +3.3 | | | | | |
| 5.) | 830°C/15MIN | LIGHT AMBER | −2.9 | | | | | |
| 6.) | 700°C/24HR : 800°C/12HR | LIGHT AMBER | +3.1 | | | | | |
| 7.) | 700°C/24HR : 740°C/24HR : 800°C/12HR | LIGHT AMBER | −3.4 | | | | | |
| 8.) | 700°C/24HR : 740°C/24HR : 800°C/12HR | LIGHT AMBER | −2.9 | | | | | |
| 9.) | 700°C/24HR : 740°C/24HR : 800°C/12HR | LIGHT AMBER | +1.7 | | | | | |
| 10.) | 705°C/1HR : 1000°C/1HR | DARK BROWN | − | +9.5 | | | | |
| 12.) | 840°C/1HR | LIGHT BROWN | − | 4.9 | | | | |
| 13.) a) | 700°C/4HR : 830°C/2HR | DARK BROWN | − | 5.7 | 92 | 25 | 80 | 91 |
| b) | 960°C/2MIN | DARK BROWN | − | 8.5 | − | − | − | − |
| c) | 960°C/3MIN | DARK BROWN | − | 7.0 | − | 25 | 54 | 65 |
| d) | 960°C/8MIN | DARK BROWN | − | 9.4 | − | − | − | − |
| 14.) | 700°C/4HR    830°C/2HR | DARK BROWN | − | − | − | 23 | 80 | 84 |

EP 0 156 479 B1

# Fig.3.